# EUROPÄISCHE PATENTSCHRIFT

(11) **EP 2 476 160 B1**
(45) Veröffentlichungstag und Bekanntmachung des Hinweises auf die Patenterteilung: **22.11.2017**
(21) Anmeldenummer: 10752551.1
(22) Anmeldetag: 03.09.2010
(51) Int. Cl.: H01M 2/02, H01M 2/20, H01M 10/04, H01M 10/625, H01M 10/647, H01M 10/6556, H01M 10/613, H01M 10/052

(54) **VERFAHREN ZUR HERSTELLUNG EINES ENERGIESPEICHERHALTERS FÜR EIN FAHRZEUG**
METHOD FOR PRODUCING AN ENERGY STORE HOLDER FOR A VEHICLE
PROCÉDÉ DE FABRICATION D'UN SUPPORT D'ACCUMULATEUR D'ÉNERGIE POUR UN VÉHICULE

(30) Priorität: 10.09.2009 DE 102009040814
(43) Veröffentlichungstag der Anmeldung: 18.07.2012
(73) Patentinhaber: MAHLE Behr GmbH & Co. KG, 70469 Stuttgart (DE)
(72) Erfinder: HECKENBERGER, Thomas, 5837 Fentange (LU); ISERMEYER, Tobias, 70469 Stuttgart (DE); KOHLBERGER, Markus, 70174 Stuttgart (DE); SCHIEHLEN, Thomas, 89174 Altheim (DE); HERRMANN, Hans-Georg, 66132 Saarbrücken (DE); FEHRENBACHER, Christoph, 70597 Stuttgart (DE)
(74) Vertreter: Grauel, Andreas
(86) Internationale Anmeldenummer: PCT/EP2010/062935
(87) Internationale Veröffentlichungsnummer: WO 2011/029776

(56) Entgegenhaltungen:
- EP-A2- 1 818 998
- WO-A1-2006/093010
- DE-A1-102008 010 838
- DE-T2- 69 839 213
- US-B1- 6 632 560

## Beschreibung

Die vorliegende Erfindung bezieht sich auf ein Verfahren zur Herstellung eines Energiespeicherhalters gemäß dem Oberbegriff des Anspruchs 1.

In modernen HEV/EV-Fahrzeugen (HEV = hybrid electro vehicle= Hybrid-Elektrofahrzeug, EV = electro vehicle= Elektrofahrzeug) kommen zukünftig wahrscheinlich Li-Ionen Akkus als Energiespeicher zum Einsatz. Bei diesen kommt es beim schnellen Laden und Entladen aufgrund von Widerständen in und außerhalb der Zellen zur Erwärmung dieser Zellen. Temperaturen über 50°C schädigen jedoch auf Dauer diese Batterie- oder Akkumulatorzellen; deswegen sollten die Zellen im Betrieb gekühlt werden. Eine Anbindung eines Batterie- oder Akkugehäuses mit einer Fahrzeugstruktur sollte dabei mit berücksichtigt werden. Dabei sollte eine Anbindung dieser Akkus oder Batterien als rohbauspezifisches Bauteil ausgelegt werden, um im Fahrzeug einfach verbaut werden zu können. Im speziellen Fall kann eine Integration eines Batteriegehäuses im EV-Smart als Beispiel betrachtet werden. Das Hauptaugenmerk liegt hierbei auf den Abmessungen und der Masse der Batteriezellen.

Für den Einsatz in HEVs oder EVs kommen dabei im Wesentlichen drei verschiedene Gehäusetypen für sekundäre Li-Ionen oder Li-Polymerzellen in Betracht:
- Rundzellen mit hartem Gehäuse
- Prismatische Zellen mit hartem Gehäuse
- Prismatische Zellen mit Softverpackung aus Aluminiumverbundfolie, sogenannte Coffee Bag Zellen.

Moderne Lithium-Ionen-(Akku-)Zellen werden in einem tiefgezogenen und/oder verschweißten Gehäuse aus Aluminium (üblicherweise mit einer Wandstärke von 200-400µm) verpackt. Die einzelnen Zellen werden herkömmlicherweise dann auf Kühlbleche montiert (z.B. durch Kleben). Diese Kühlbleche wiederum werden mit einer Kühlplatte (Flüssigkühlung, Verdampferplatte oder Rohrverdampfer) verbunden, wodurch die Akkuzellen im Betrieb gekühlt werden können.

Während Zellen mit hartem Gehäuse direkt mit Kopf, Boden oder Mantel mit der Kühlplatte verbunden werden können, brauchen Zellen mit einer Aluminiumverbundfolie somit ein Kühlblech zur mechanischen Fixierung. Durch diese zusätzlich benötigten Kühlbleche geht ein Teil der Vorteile bei Gewicht und Kosten wieder verloren. Außerdem wird der Wärmeübergang von Zelle zu Kühlblech durch die Klebeschicht verschlechtert.

Derzeitige Batteriegehäuse-Konzepte sind, bedingt durch die Zellabmessungen, unförmig und wenig spezifisch auf die Fahrzeugstruktur zugeschnitten. Daher ist eine Anbindung in der bestehenden Fahrzeugarchitektur schwierig und meist mit Bauraumeinbußen bzw. ineffektiver Volumenausnutzung verbunden.

Die Druckschriften WO 2006/093010 A1, EP 1 818 998 A1 und DE 10 2008 010 838 A1 und die US 6,632,560 B1 betreffen jeweils eine Batterieeinheit mit Mitteln zur Kontaktierung und mit einem Gehäuse.

Es ist die Aufgabe der vorliegenden Erfindung ein verbessertes Verfahren zur Herstellung eines Energiespeicherelementhalters zu schaffen.

Diese Aufgabe wird durch ein Verfahren gemäß Anspruch 1 gelöst.

Die vorliegende Erfindung schafft ein Verfahren zur Herstellung eines Energiespeicherhalters für ein Fahrzeug, wobei das Verfahren die folgenden Schritte aufweist:
- Bereitstellen einer Halteeinheit, die zur Aufnahme und Fixierung von zumindest einer Energiespeichereinheit ausgebildet ist und die eine Grundplatte aufweist, die zumindest einen freiliegenden Kühlkanal umfasst, der zur Führung eines Kühlfluids ausgebildet ist;
- Bereitstellen einer Kühlungsplatte; und
- Verbinden der Kühlungsplatte mit der Halteeinheit, wodurch der zumindest eine freiliegende Kühlkanal verschlossen wird.

Die vorliegende Erfindung basiert auf der Erkenntnis, dass eine Kombination der Funktionen "Kühlung" und "Behausung" unter Einsparung von Material dadurch ausgeführt werden kann, dass beim Verbinden der Kühlungsplatte mit der Halteeinheit der zumindest eine Kühlkanal verschlossen wird. Dieser Kanal kann dann beim Betrieb des Energiespeicherhalters mit einem Kühlfluid durchflossen werden. Auf diese Weise kann vermieden werden, dass zuerst eine Kühlungsplatte mit einem vollständig fluiddichten Kanal hergestellt zu werden braucht und diese Kühlungsplatte anschließend mit der Halteeinheit verbunden wird. Auf diese Weise kann Material zur Abdichtung des Kühlkanals oder, bei der Verwendung von mehreren Kühlkanälen in der Kühlungsplatte oder in der Grundplatte der Halteeinheit, der einzelnen Kühlkanäle eingespart werden.

Die vorliegende Erfindung bietet somit den Vorteil, dass sich einerseits eine Gewichtsreduktion des Energiespeicherhalters als auch eine Kostenreduktion durch eine Verringerung des zu verwendenden Materials umsetzen lässt.

Erfindungsgemäß ist es weiterhin, wenn ferner ein Schritt des Bereitstellens einer weiteren Kühlungsplatte vorgesehen ist, wobei die weitere Kühlungsplatte zumindest einen freiliegenden weiteren Kühlkanal aufweist und wobei im Schritt des Verbindens ferner der freiliegende weitere Kühlkanal in der weiteren Kühlungsplatte durch eine Seitenfläche der Halteeinheit verschlossen wird oder wobei im Schritt des Bereitstellens der Halteeinheit eine Halteeinheit bereitgestellt wird, die an einer Seitenfläche zumindest einen offenliegenden weiteren Kühlkanal aufweist, die im Schritt des Verbindens ferner durch eine bereitgestellte weitere Kühlungsplatte verschlossen wird. Eine derartige Ausführungsform der vorliegenden Erfindung bietet den Vorteil, dass nicht nur eine Kühlung an einer Seite der Halteeinheit vorgesehen wird, sondern zumindest ein in dem Energiespeicherhalter anordenbares Energiespeicherelement von mehreren Seiten gekühlt werden kann. Dabei werden die erfindungsgemäßen Vorteile ausgenutzt, in dem eine Gewichtsreduktion und eine Materialeinsparung gegenüber herkömmlichen Energiespeicherhaltern realisiert werden können.

In einer anderen Ausführungsform der vorliegenden Erfindung kann im Schritt des Bereitstellens der Kühlungsplatte eine Kühlungsplatte bereitgestellt werden, die ein Metall oder Metallanteile, insbesondere Stahl, Aluminium, Magnesium, Titan oder ein Kunststoff-Metall-Hybrid, aufweist oder bei der im Schritt des Bereitstellens der Halteeinheit eine Halteeinheit mit einer Grundplatte bereitgestellt wird, wobei die Grundplatte ein Metall oder Metallanteile, insbesondere Stahl, Aluminium, Magnesium, Titan oder ein Kunststoff-Metall-Hybrid, aufweist. Eine derartige Ausführungsform der vorliegenden Erfindung bietet den Vorteil, dass Metall, insbesondere die genannten Metalle eine sehr gute Wärmeleitfähigkeit aufweisen, so dass eine hohe Wärmeabfuhrrate und somit eine gute Kühlung von Energiespeicherelementen möglich ist, die in dem Energiespeicherhalter angeordnet sein können.

Auch kann ein Verfahren zur Herstellung einer Energiespeichereinheit vorgesehen sein, das folgende Schritte aufweist:
- die Schritte eines der vorstehend beschriebenen Ausführungsformen des Verfahrens zur Herstellung eines Energiespeicherhalters; und
- Einfügen von zumindest einem Energiespeicherelement in die Halteeinheit, um die Energiespeichereinheit herzustellen.

Eine derartige Ausführungsform der vorliegenden Erfindung bietet den Vorteil, dass die Energiespeichereinheit auf einfache Weise mit Energiespeicherelementen gefüllt werden kann und diese sicher in der Halteeinheit befestigt werden können. Insbesondere für Anwendungen in einem Fahrzeug ist ein solcher sicherer Verbau von Vorteil, da hier Erschütterungen bei der Fahrt dann nicht zu Verschiebungen oder Beschädigungen der Energiespeicherelemente in der Halteeinheit führen sollen.

Besonders vorteilhaft ist es, wenn das Verfahren zusätzlich einen Schritt des Bereitstellens einer zusätzliche Kühlungsplatte umfasst, wobei die zusätzliche Kühlungsplatte zumindest eine Öffnung aufweist und wobei das Verfahren weiterhin einen Schritt des Anbringens der zusätzlichen Kühlungsplatte an der Halteeinheit aufweist, derart, dass nach dem Schritt des Anbringens ein Kontaktanschluss des zumindest einen Energiespeicherelementes durch die zumindest eine Öffnung der zusätzlichen Kühlungsplatte kontaktierbar ist. Eine derartige Ausführungsform der vorliegenden Erfindung bietet den Vorteil, dass durch die von mehreren Seiten um das Energiespeicherelement angeordneten Kühlungsplatten eine sehr gute Kühlungsmöglichkeit bzw. Wärmeabfuhrrate der in der Halteeinheit angeordneten Energiespeicherelemente ermöglicht wird.

Günstig ist es auch, wenn im Schritt des Einfügens eine Mehrzahl von Energiespeicherelementen in direktem Kontakt nebeneinander in die Halteeinheit eingefügt werden und wobei im Schritt des Einfügens die Energiespeichereinheiten derart in die Halteeinheit eingefügt werden, dass eine elektrische Kontaktierung von Kontaktanschlüssen der einzelnen Energiespeicherelemente von einer gemeinsamen Kontaktierungsseite aus ermöglicht wird. Eine derartige Ausführungsform der vorliegenden Erfindung bietet den Vorteil, dass auf technisch sehr einfache Weise eine Kontaktierung an den Kontaktanschlüssen der Energiespeicherelemente von der gemeinsamen Kontaktierungsseite aus erfolgen kann. Dies ermöglicht beispielsweise eine technisch sehr einfach umzusetzende Zusammenschaltung von mehreren Energiespeicherelementen, um eine Gesamt-Energiespeichereinheit zu erhalten, die zum Betrieb des Fahrzeugs benötigte Spannungs- und/oder Stromstärkenwerte bereitstellen kann.

In einer anderen Ausführungsform der vorliegenden Erfindung kann ferner ein Schritt des Anbringens einer Kontaktschiene zwischen unterschiedlichen Kontaktanschlüssen von Energiespeicherelementen vorgesehen sein. Eine derartige Ausführungsform der vorliegenden Erfindung bietet den Vorteil, unterschiedliche Kontaktanschlüsse von unterschiedlichen Energiespeicherelementen zu verbinden, um hierdurch beispielsweise bei unterschiedlichen benötigten Spannungs- oder Stromstärkewerten für einen Verbraucher sehr flexibel eine Parallel- oder Reihenschaltung der Energiespeicherelemente zu ermöglichen. Auf diese Weise können also Energiespeicherelemente mit einer niedrigen Spannung zur Bereitstellung von im Fahrzeug benötigten hohen Spannungen einfach verwendet werden. Die Bereitstellung von Energiespeicherelementen mit einer niedrigen Spannung ist dabei wesentlich kostengünstiger als die Bereitstellung von Energiespeicherelementen mit einer entsprechend hohen Spannung. Zugleich kann jedoch für die unterschiedlichen Einsatzszenarien eine einheitliche Energiespeichereinheit vorgesehen werden, die je nach Einsatzzweck mit den entsprechenden Kontaktschienen versehen werden kann.

Auch kann ferner ein Schritt des Anbringens eines Deckels vorgesehen sein, wobei der Deckel derart ausgefügt und angebracht wird, dass eine elektrisch leitfähige Verbindung von einem Kontaktanschluss des zumindest einen Energiespeicherelements zu einem Mantel des Energiespeicherelementes verhindert wird. Eine derartige Ausführungsform der vorliegenden Erfindung bietet den Vorteil, die Energiespeicherelemente gegen ein Herausfallen zu schützen und zugleich sicherzustellen, dass eine elektrische Reihenschaltung der einzelnen Energiespeicherelemente ermöglicht wird.

Auch kann im Schritt des Einfügens das Einfügen des zumindest einen Energiespeicherelementes derart erfolgen, dass ein Mantel des zumindest einen Energiespeicherelementes mit einem Kontaktanschluss des Energiespeicherelementes elektrisch leitfähig verbunden wird. Eine derartige Ausführungsform der vorliegenden Erfindung bietet den Vorteil, dass eine Parallelschaltung der einzelnen Energiespeicherelemente sehr einfach möglich wird. Diese Parallelschaltung benötigt dann lediglich eine Verbindung von ersten Kontaktanschlüssen der einzelnen Energiespeicherelemente (beispielsweise durch eine Kontaktschiene), wobei die Verbindung zwischen zweiten Kontaktanschlüssen oder einem Mantel der Energiespeicherelement (und beispielsweise einem Teil der Halteeinheit) als zweiter elektrischer Anschluss dienen kann.

Auch kann im Schritt des Bereitstellens der Halteeinheit eine Halteeinheit bereitgestellt werden, die zur spielfreien Aufnahme zumindest einer Energiespeichereinheit ausgebildet ist, die eine wabenförmige oder eine runde Außenstruktur aufweist. Eine derartige Ausführungsform der vorliegenden Erfindung bietet den Vorteil, dass eine sichere Aufnahme der Energiespeicherelemente möglich wird. Dies verhindert, dass beispielsweise bei durch die Fahrt des Fahrzeugs verursachten Bewegungen die Energiespeicherelemente durch ein Verrutschen in der Halteeinheit beschädigt werden. Zugleich wird sichergestellt, dass durch das Vermeiden der Bewegung der Energiespeicherelemente in der Halteeinheit eine Kontaktierung der Kontaktanschlüsse der Energiespeicherelemente zuverlässig erhalten bleibt.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung eines ersten Ausführungsbeispiels der vorliegenden Erfindung in Seitenansicht;
- Fig. 2: eine Darstellung eines Ausführungsbeispiels der vorliegenden Erfindung in Aufsichtdarstellung;
- Fig. 3: eine isometrische Darstellung eines Gehäuseelementes eines weiteren Ausführungsbeispiels der vorliegenden Erfindung;
- Fig. 4: eine isometrische Darstellung eines Gehäuseelementes eines Ausführungsbeispiels der vorliegenden Erfindung;
- Fig. 5: eine Schnittdarstellung durch ein Gehäuseteil gemäß einem Ausführungsbeispiel der vorliegenden Erfindung;
- Fig. 6: eine Aufsichtdarstellung eines Gehäuseteils eines Ausführungsbeispiels der vorliegenden Erfindung;
- Fig. 7: ein Ablaufdiagramm eines Ausführungsbeispiels der vorliegenden Erfindung als Verfahren; und
- Fig. 8: ein weiteres Ablaufdiagramm eines Ausführungsbeispiels der vorliegenden Erfindung als Verfahren.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

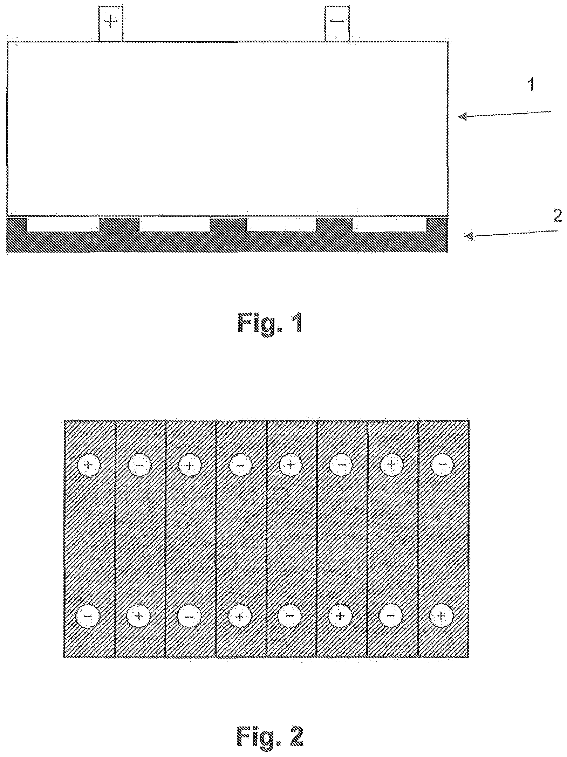

Fig. 1 zeigt eine Darstellung eines ersten Ausführungsbeispiels der vorliegenden Erfindung in Seitenansicht, bei der eine Integration der Kühlplatte in das Zellgehäuse für ein galvanisches Element als Energiespeichereinheit erfolgt.

Zuerst wird ein Gehäuse für die Energiespeicherzellen (z.B. die Akku- oder Batteriezellen), beispielsweise aus Aluminiumblech, geformt. Eines oder mehrere Gehäuse 1 werden nun zusammen mit den Teilen mindestens einer Kühlplatte 2 verlötet, so dass ein fester Verbund aus Gehäuse 1 und Kühlplatte 2 entsteht. Durch das Verbinden der Kühlplatte 2 mit dem Gehäuse 1 werden Kühlkanäle, die in der Kühlungsplatte ausgebildet sind und freigelegen haben, günstigerweise fluiddicht verschlossen. Dies kann derart erfolgen, dass das Zellgehäuse 1 eine Abdeckplatte des Kanalblechs 2 bildet. Weiterhin kann ein derart hergestellter Energiespeicherhalter nun mit den einzelnen Energiespeicherelementen bestückt werden, die Kontaktierungsanschlüsse aufweist, die an einer gemeinsamen Kontaktierungsseite aus dem Energiespeicherhalter (beispielsweise in Fig. 1 nach oben) herausragen. Durch ein solches Herstellungsverfahren kann eine Energiespeichereinheit erhalten werden, wie sie in Fig. 1 in einer Seitenansicht dargestellt ist.

Fig. 2 zeigt eine Aufsichtsdarstellung der Energiespeichereinheit von oben, wobei acht (Energiespeicher-) Zellen oder -elemente nebeneinander in den Energiespeicherhalter eingefügt wurden. Nun folgt eine Füllung mit dem Elektrodenensemble und Elektrolyten. Die Elektroden können dabei derart in den Energiespeichereinheiten installiert werden, dass benachbarte Elektroden von unterschiedlichen Energiespeicherelementen eine unterschiedliche Polarität haben. Auf diese Weise wird eine Reihenschaltung der einzelnen Energiespeicherelemente sehr einfach ermöglicht, indem nur zwei benachbarte Kontaktanschlüsse der Energiespeicherelemente durch sehr kurze Verbindungsschienen miteinander verbunden zu werden brauchen, um die Energiespeichereinheit herzustellen.

Anschließend kann ein Deckel bereitgestellt und auf den mit Energiespeicherelementen bestückten Energiespeicherhalter derart aufgebracht werden, dass an einem Mantel der (Energiespeicher-) Zelle oder mehreren Zellen kein Potential anliegt, damit die einzelnen Zellen auf der Kühlplatte 1 auch in Reihe geschaltet werden können. Nach der Formation werden die Zellen beispielsweise mittels Kontaktschienen untereinander und mit einer Schutzelektronik in gewünschter Weise verbunden.

Neben prismatischen Zellen können beispielsweise auch Rundzellen als Energiespeicherelemente in einer Bienenwabenstruktur auf einer Kühlplatte angeordnet und durch den Energiespeicherhalter gehalten werden. Wenn nur eine elektrische Parallelschaltung gewünscht ist, kann am Zellmantel auch ein Potential angelegt werden, der dann gegenüber einem ersten Kontaktanschluss eine zweite elektrische Anbindung oder einen zweiten Kontaktanschluss darstellt. Es können auch mehrere Kühlplatten an der Halteeinheit angebracht werden, z.B. unten und an einer oder mehreren (Außen-) Seiten. Mit einer Aussparung für die Kontakte auch an der gemeinsamen Kontaktierungsseite. Alternativ kann auch das Gehäuse mit einer freiliegenden Kanalstruktur ausgeformt werden, wobei die freiliegenden Kanäle, die zur Führung eines Kühlfluids im Betrieb des Energiespeicherhalters ausgebildet sind, durch eine beispielsweise aufgelötete Abdeckplatte verschlossen werden.

Durch eine Integration der Kühlungsfunktion in die Verpackung der Energiespeicherelemente wird die Wärmeableitung verbessert, die Kosten und das Gewicht im Vergleich zu einer über ein Kühlblech gefügten Zelle verbessert.

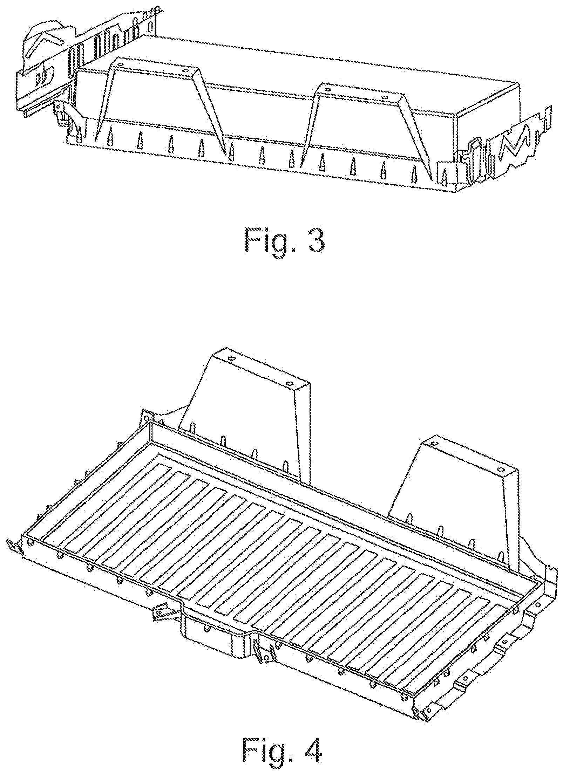

Ein weiteres Ausführungsbeispiel der vorliegenden Erfindung als Gehäuseteil für die Aufnahme von Energiespeicherelementen ist in isometrischer Darstellung in Fig. 3 gezeigt. Bei einem solchen Ausführungsbeispiel sollen die Einzelteilkomponenten, wie beispielsweise Batteriezellen, Rahmengestell, Elektronikkomponenten durch eine Halterung aufgenommen werden und gleichzeitig die Möglichkeit einer Verbindung zur Rohkarosserie hergestellt werden. Zudem soll ein bereitzustellendes Gehäuse ausreichenden Schutz gegen Intrusionen bieten, wie sie insbesondere bei Unfällen auftreten. Im speziellen Fall soll das Gehäusekonzept auch die Kühlstruktur enthalten und somit die Funktion "Kühlen" der Batteriezellen erfüllen. Das Batteriegehäuse wird in zwei Teile unterschieden, zum einen in Gehäusedeckel und zum anderen in Gehäuseboden.

Der Gehäusedeckel aus Fig. 3 kann ein Kunststoffteil beispielsweise aus gängigen technischen Kunststoffmaterialien (wie Faserverbundwerkstoffen) sein. Dies stellt eine kostengünstige Verarbeitung und eine gewichtsoptimale Umsetzung sicher. Durch Versicken und Verbinden mit dem Gehäuseboden erhält dieser die nötige Stabilität.

Der Gehäuseboden, wie er beispielswiese der isometrischen Darstellung aus Fig. 4 zu entnehmen ist, soll vorzugsweise aus Materialien, wie hochfester Stahl, Aluminium, Magnesium, Titan, FVK, Kunststoff-Metall-Hybrid etc. bestehen. Die Herstellung des Gehäusebodens soll, soweit möglich, durch ein Gussverfahren erfolgen. Dabei soll der Gehäuseboden so ausgeführt werden, dass auf der Unterseite die benötigte Steifigkeit durch Streben erreicht wird.

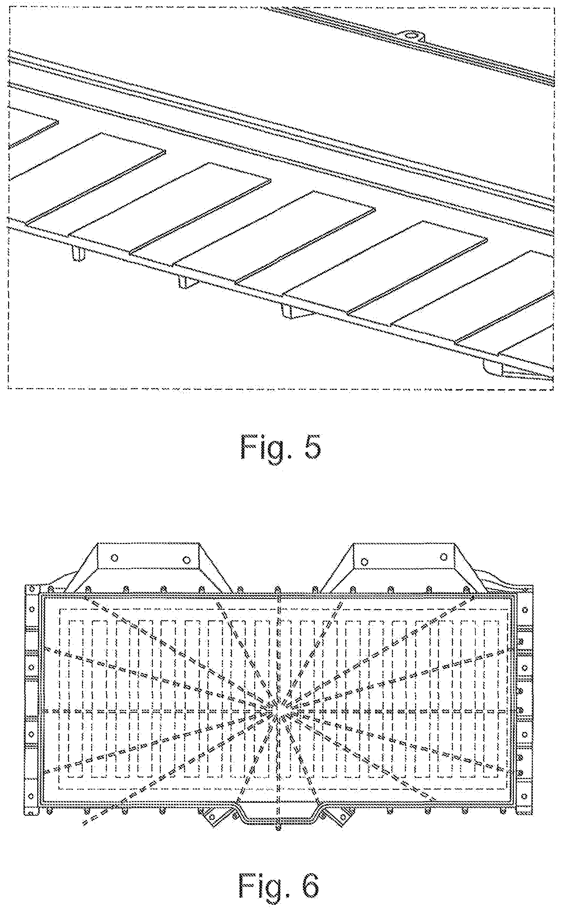

Das Gehäuse, das aus dem Gehäusedeckel gemäß der Darstellung aus Fig. 3 und dem Gehäuseboden gemäß der Darstellung aus Fig. 4 bestehen kann, sollte derart ausgeführt sein, dass es wasserdicht ist und geöffnet und wieder wasserdicht verschlossen werden kann. Elemente zum Druckausgleich bzw. zur Vermeidung von Kondensat soll das Gehäuse ebenfalls umfassen. Der Gehäuseboden besteht dann beispielsweise aus einer Deckplatte und einem gegossenem Tragelement, das die Energiespeicherelemente aufnehmen kann. Auf der Oberseite des Gehäusebodens sind die Kühlkanäle freigespart, die dann beispielsweise durch das Aufbringen einer Deckplatte fluiddicht verschlossen werden. Die beiden Elemente, Deckplatte und gegossenes Tragelement oder Gehäuseboden, können dabei in einem Lötvorgang stoffschlüssig miteinander verbunden werden. Eine isometrische Schnittdarstellung eines Ausführungsbeispiels des Gehäusebodens ist in Fig. 5 dargestellt. In Fig. 6 ist eine Aufsichtdarstellung des Gehäusebodens gezeigt, bei dem Verstärkungsstreben auf einer Seite des Bodens gestrichelt dargestellt sind.

Die Vorteile eines derartigen Ausführungsbeispiels der Erfindung bestehen in der Leichtbauweise des Konzeptes, sowie in der hohen Funktionsintegration. Dadurch lassen sich Funktionen wie Halten und Fixieren der oben genannten Komponenten realisieren. Es sollen alle Rohbauanbindungspunkte im Gehäuseboden aufgenommen werden. Trotz des Leichtbaus kann die hohe Masse der Batterie- oder Akkuzellen von bis zu 200 kg getragen werden.

Durch geschickte Verlegung der Trennebene zwischen Gehäusedeckel und Gehäuseboden wird die Integration im Rohbaumontageprozess ermöglicht. Der Hauptvorteil eines solchen Ausführungsbeispiels der Erfindung liegt dabei in der Kombination der Tragstruktur mit der Kühlstruktur.

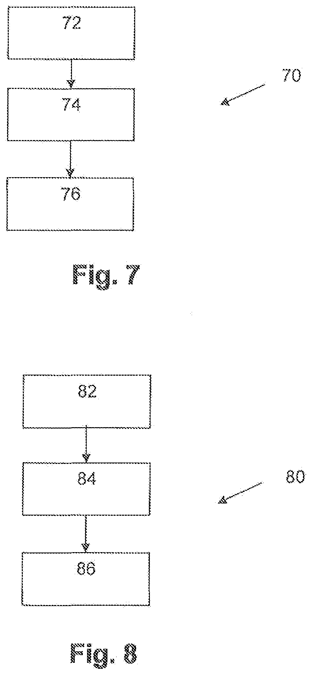

Fig. 7 zeigt ein Ablaufdiagramm eines Ausführungsbeispiels der Erfindung als Verfahren 70 zur Herstellung eines Energiespeicherhalters für ein Fahrzeug. Das Verfahren 70 umfasst einen Schritt des Bereitstellens 72 einer Kühlungsplatte mit zumindest einem freiliegenden Kühlkanal, der zur Führung eines Kühlfluids ausgebildet ist. Weiterhin weist das Verfahren einen Schritt des Bereitstellens 74 einer Halteeinheit auf, die zur Aufnahme und Fixierung von zumindest einer Energiespeichereinheit ausgebildet ist. Schließlich umfasst das Verfahren 70 einen Schritt des Verbindens 76 der Kühlungsplatte mit der Halteeinheit, wodurch der zumindest eine Kühlkanal verschlossen wird.

Fig. 8 zeigt ein Ablaufdiagramm eines Ausführungsbeispiels der vorliegenden Erfindung als Verfahren 80 zur Herstellung eines Energiespeicherhalters für ein Fahrzeug. Das Verfahren 80 umfasst einen Schritt des Bereitstellens 82 einer Halteeinheit, die zur Aufnahme und Fixierung von zumindest einer Energiespeichereinheit ausgebildet ist und die eine Grundplatte aufweist, die zumindest einen freiliegenden Kühlkanal umfasst, der zur Führung eines Kühlfluids ausgebildet ist. Ferner weist das Verfahren 80 einen Schritt des Bereitstellens 84 einer Kühlungsplatte und einen Schritt des Verbindens 86 der Kühlungsplatte mit der Halteeinheit auf, wodurch der zumindest eine freillegende Kühlkanal verschlossen wird.

## Patentansprüche

1. Verfahren (80) zur Herstellung eines Energiespeicherhalters für ein Fahrzeug, wobei das Verfahren (80) die folgenden Schritte aufweist:
- Bereitstellen (82) einer Halteeinheit (1), die zur Aufnahme und Fixierung von zumindest einer Energiespeichereinheit ausgebildet ist und die eine Grundplatte aufweist, die zumindest einen freiliegenden Kühlkanal umfasst, der zur Führung eines Kühlfluids ausgebildet ist;
- Bereitstellen (84) einer Kühlungsplatte (2); und
- Verbinden (86) der Kühlungsplatte (2) mit der Halteeinheit (1), wodurch der zumindest eine freiliegende Kühlkanal verschlossen wird,
**dadurch gekennzeichnet, dass** ferner ein Schritt des Bereitstellens einer weiteren Kühlungsplatte vorgesehen ist, wobei die weitere Kühlungsplatte zumindest einen offenliegenden weiteren Kühlkanal aufweist und wobei im Schritt des Verbindens (86) ferner der offenliegende weitere Kühlkanal in der weiteren Kühlungsplatte durch eine Seitenfläche der Halteeinheit (1) verschlossen wird oder wobei im Schritt des Bereitstellens der Halteeinheit (1) eine Halteeinheit (1) bereitgestellt wird, die an einer Seitenfläche zumindest einen offenliegenden weiteren Kühlkanal aufweist, die im Schritt des Verbindens (86) ferner durch eine bereitgestellte weitere Kühlungsplatte verschlossen wird.

2. Verfahren (80) gemäß Anspruch 1, **dadurch gekennzeichnet, dass** im Schritt des Bereitstellens der Kühlungsplatte (2) eine Kühlungsplatte (2) bereitgestellt wird, die ein Metall oder Metallanteile, insbesondere Stahl, Aluminium, Magnesium, Titan oder ein Kunststoff-Metall-Hybrid, aufweist oder dass im Schritt des Bereitstellens der Halteeinheit (1) eine Halteeinheit (1) mit einer Grundplatte mit freiliegenden Kühlungskanälen bereitgestellt wird, wobei die Grundplatte ein Metall oder Metallanteile, insbesondere Stahl, Aluminium, Magnesium, Titan oder ein Kunststoff-Metall-Hybrid, aufweist.

3. Verfahren zur Herstellung einer Energiespeichereinheit für ein Fahrzeug, das folgende Schritte aufweist:
- die Schritte eines Verfahrens (80) gemäß einem der Ansprüche 1 oder 2; und
- Einfügen von zumindest einem Energiespeicherelement in die Halteeinheit (1), um die Energiespeichereinheit herzustellen.

4. Verfahren gemäß Anspruch 3, **dadurch gekennzeichnet, dass** das Verfahren einen Schritt des Bereitstellens einer zusätzlichen Kühlungsplatte umfasst, wobei die zusätzliche Kühlungsplatte zumindest eine Öffnung aufweist und wobei das Verfahren weiterhin einen Schritt des Anbringens der zusätzlichen Kühlungsplatte an der Halteeinheit (1) aufweist, derart, dass nach dem Schritt des Anbringens ein Kontaktanschluss des zumindest einen Energiespeicherelementes durch die zumindest eine Öffnung der zusätzlichen Kühlungsplatte kontaktierbar ist.

5. Verfahren gemäß Anspruch 3, **dadurch gekennzeichnet, dass** im Schritt des Einfügens eine Mehrzahl von Energiespeicherelementen in direktem Kontakt nebeneinander in die Halteeinheit (1) eingefügt werden und wobei im Schritt des Einfügens die Energiespeicherelemente derart in die Halteeinheit (1) eingefügt werden, dass eine elektrische Kontaktierung von Kontaktanschlüssen der einzelnen Energiespeicherelemente von einer gemeinsamen Kontaktierungsseite aus ermöglicht wird.

6. Verfahren gemäß Anspruch 4 oder 5, **dadurch gekennzeichnet, dass** ferner ein Schritt des Anbringens einer Kontaktschiene zwischen unterschiedlichen Kontaktanschlüssen von Energiespeicherelementen vorgesehen ist.

7. Verfahren gemäß einem der Ansprüche 3 bis 6, **dadurch gekennzeichnet, dass** ferner ein Schritt des Anbringens eines Deckels vorgesehen ist, wobei der Deckel derart ausgefügt und angebracht wird, dass eine elektrisch leitfähige Verbindung von einem Kontaktanschluss des zumindest einen Energiespeicherelementes zu einem Mantel des Energiespeicherelementes verhindert wird.

8. Verfahren gemäß einem der Ansprüche 4 bis 7, **dadurch gekennzeichnet, dass** im Schritt des Einfügens das Einfügen des zumindest einen Energiespeicherelementes derart erfolgt, dass ein Mantel des zumindest einen Energiespeicherelementes mit einem Kontaktanschluss des Energiespeicherelementes elektrisch leitfähig verbunden wird.

9. Verfahren gemäß einem der vorangegangenen Ansprüche, **dadurch gekennzeichnet, dass** im Schritt des Bereitstellens der Halteeinheit (1) eine Halteeinheit (1) bereitgestellt wird, die zur spielfreien Aufnahme zumindest eines Energiespeicherelementes ausgebildet ist, die eine wabenförmige oder eine runde Außenstruktur aufweist.

## Claims

1. A method (80) for producing an energy storage device holder for a vehicle, wherein the method (80) has the following steps:
- provision (82) of a holder unit (1) that is designed to accommodate and secure at least one energy storage unit and that has one base plate that includes at least one exposed cooling channel that is designed to carry a cooling fluid;
- provision (84) of a cooling plate (2); and
- connection (86) of the cooling plate (2) to the holder unit (1), by which means the at least one exposed cooling channel is closed,
**characterised in that** furthermore a step of providing an additional cooling plate is included, wherein the additional cooling plate has at least one additional exposed cooling channel, and wherein, furthermore, the additional exposed cooling channel in the additional cooling plate is closed by a side surface of the holder unit (1) during the connection step (86), or wherein, during the step of providing the holder unit (1), a holder unit (1) is provided that has on a side surface at least one additional exposed cooling channel that is further closed by an additional provided cooling plate during the connection step (86).

2. The method (80) according to claim 1, **characterised in that** a cooling plate (2) that has a metal or metal constituents, in particular steel, aluminium, magnesium, titanium, or a plastic/metal hybrid, is provided during the step of providing the cooling plate (2), or **in that** during the step of providing the holder unit (1), a holder unit (1) with a base plate having exposed cooling channels is provided, wherein the base plate has a metal or metal constituents, in particular steel, aluminium, magnesium, titanium, or a plastic/metal hybrid.

3. A method for producing an energy storage unit for a vehicle, having the following steps:
- the steps of a method (80) according to one of claims 1 or 2; and
- insertion of at least one energy storage element in the holder unit (1) in order to produce the energy storage unit.

4. The method according to claim 3, **characterised in that** the method includes a step of providing an additional cooling plate, wherein the additional cooling plate has at least one opening, and wherein the method additionally has a step of mounting the additional cooling plate on the holder unit (1) in such a manner that, after the mounting step, a contact terminal of the at least one energy storage element can be contacted through the at least one opening in the additional cooling plate.

5. The method according to claim 3, **characterised in that** a plurality of energy storage elements are inserted in direct contact next to one another in the holder unit (1) during the insertion step, and wherein the energy storage elements are inserted in the holder unit (1) during the insertion step in such a manner that establishment of an electrical contact to contact terminals of the individual energy storage elements from a common contact side is made possible.

6. The method according to claim 4 or 5, **characterised in that** additionally a step of mounting a contact bar between different contact terminals of energy storage elements is provided.

7. The method according to one of claims 3 to 6, **characterised in that** a step of mounting a cover is additionally provided, wherein the cover is made and mounted such that an electrically conductive connection from a contact terminal of the at least one energy storage element to a jacket of the energy storage element is prevented.

8. The method according to one of claims 4 to 7, **characterised in that**, in the insertion step, the insertion of the at least one energy storage element takes place in such a manner that a jacket of the at least one energy storage element is connected in an electrically conductive manner to a contact terminal of the energy storage element.

9. The method according to one of the preceding claims, **characterised in that**, in the step of providing the holder unit (1), a holder unit (1) is provided that is designed to accommodate without play at least one energy storage element that has a honeycomb-shaped or round outer structure.

## Revendications

1. Procédé (80) pour la fabrication d'un support d'accumulateur d'énergie pour un véhicule, où le procédé (80) présente les étapes suivantes qui consistent :
- à fournir (82) un ensemble de support (1) qui est configuré pour servir de logement et de fixation d'au moins un ensemble accumulateur d'énergie et qui présente une plaque de base qui comprend au moins un conduit de refroidissement dégagé qui est conçu pour le guidage d'un fluide de refroidissement;
- à fournir (84) une plaque de refroidissement (2); et
- à assembler (86) la plaque de refroidissement (2) avec l'ensemble de support (1), grâce à quoi le conduit de refroidissement dégagé au moins au nombre de un est fermé,
**caractérisé en ce qu'**il est prévu en outre une étape consistant à fournir une autre plaque de refroidissement, où l'autre plaque de refroidissement présente au moins un autre conduit de refroidissement dégagé et où, au cours de l'étape concernant l'assemblage (86), l'autre conduit de refroidissement dégagé, se trouvant dans l'autre plaque de refroidissement, est en outre fermé par une surface latérale de l'ensemble de support (1), ou bien, au cours de l'étape concernant la fourniture de l'ensemble de support (1), il est procédé à la fourniture d'un ensemble de support (1) qui, au niveau d'une surface latérale, présente au moins un autre conduit de refroidissement dégagé qui, au cours de l'étape concernant l'assemblage (86), est en outre fermé par une autre plaque de refroidissement fournie.

2. Procédé (80) selon la revendication 1, **caractérisé en ce que**, au cours de l'étape concernant la fourniture de la plaque de refroidissement (2), il est procédé à la fourniture d'une plaque de refroidissement (2) qui présente un métal ou des éléments en métal, en particulier de l'acier, de l'aluminium, du magnésium, du titane ou un hybride de métal et de matière plastique, ou bien **en ce que**, au cours de l'étape concernant la fourniture de l'ensemble de support (1), il est procédé à la fourniture d'un ensemble de support (1) ayant une plaque de base comprenant des conduits de refroidissement dégagés, où la plaque de base présente un métal ou des éléments en métal, en particulier de l'acier, de l'aluminium, du magnésium, du titane ou un hybride de métal et de matière plastique.

3. Procédé de fabrication d'un ensemble accumulateur d'énergie pour un véhicule, procédé qui présente les étapes suivantes :
- les étapes d'un procédé (80) selon l'une des revendications 1 ou 2 ; et
- l'étape consistant à insérer, dans l'ensemble de support (1), au moins un élément accumulateur d'énergie, pour fabriquer l'ensemble accumulateur d'énergie.

4. Procédé selon la revendication 3, **caractérisé en ce que** le procédé comprend une étape consistant à fournir une plaque de refroidissement supplémentaire, où la plaque de refroidissement supplémentaire présente au moins une ouverture, et où le procédé présente en outre une étape concernant la mise en place de la plaque de refroidissement supplémentaire, sur l'ensemble de support (1), de manière telle qu'après l'étape de la mise en place, une borne de contact de l'élément accumulateur d'énergie au moins au nombre de un puisse être mise en contact à travers l'ouverture au moins au nombre de un de la plaque de refroidissement supplémentaire.

5. Procédé selon la revendication 3, **caractérisé en ce que**, au cours de l'étape concernant l'insertion, une pluralité d'éléments accumulateurs d'énergie est insérée dans l'ensemble de support (1), lesdits éléments accumulateurs d'énergie étant en contact direct les uns à côté des autres, et où, au cours de l'étape concernant l'insertion, les éléments accumulateurs d'énergie sont insérés dans l'ensemble de support (1), de manière telle qu'une mise en contact électrique de bornes de contact des différents éléments accumulateurs d'énergie soit rendue possible à partir d'un côté commun de mise en contact.

6. Procédé selon la revendication 4 ou 5, **caractérisé en ce qu'**il est prévu en outre une étape concernant la mise en place d'un rail de contact placé entre différentes bornes de contact d'éléments accumulateurs d'énergie.

7. Procédé selon l'une quelconque des revendications 3 à 6, **caractérisé en ce qu'**il est prévu en outre une étape concernant la mise en place d'un couvercle, où le couvercle est extrait et mis en place de manière telle, qu'une connexion électroconductrice soit empêchée entre une borne de contact de l'élément accumulateur d'énergie au moins au nombre de un, et une enveloppe de l'élément accumulateur d'énergie.

8. Procédé selon l'une quelconque des revendications 4 à 7, **caractérisé en ce que**, au cours de l'étape concernant l'insertion, l'insertion de l'élément accumulateur d'énergie au moins au nombre de un se produit de manière telle, qu'une enveloppe de l'élément accumulateur d'énergie au moins au nombre de un soit reliée de manière électroconductrice à une borne de contact de l'élément accumulateur d'énergie.

9. Procédé selon l'une quelconque des revendications précédentes, **caractérisé en ce que**, au cours de l'étape concernant la fourniture de l'ensemble de support (1), il est procédé à la fourniture d'un ensemble de support (1) qui est configuré pour le logement sans jeu d'au moins un élément accumulateur d'énergie qui présente une structure extérieure dont la forme est en nid d'abeilles ou ronde.
